# EUROPÄISCHE PATENTSCHRIFT

(11) **EP 0 314 607 B1**
(45) Veröffentlichungstag und Bekanntmachung des Hinweises auf die Patenterteilung: **27.01.1993**
(21) Anmeldenummer: 88710037.8
(22) Anmeldetag: 13.10.1988
(51) Int. Cl.: H02K 5/04, H02K 5/132, H02K 5/20

(54) **Elektromotor**
Electric motor
Moteur électrique

(30) Priorität: 26.10.1987 DE 3736159
(43) Veröffentlichungstag der Anmeldung: 03.05.1989
(73) Patentinhaber: ABS Pumpen AG, 53785 Lohmar (DE)
(72) Erfinder: Blum, Albert, CH-2072 St. Blaise (CH); Krämer, Günter, D-5900 Siegen 1 (Kaan) (DE)
(74) Vertreter: Patentanwälte Lippert, Stachow, Schmidt & Partner

(56) Entgegenhaltungen:
- DE-A- 1 728 181
- FR-A- 1 093 496
- GB-A- 2 042 280
- US-A- 3 289 018
- US-A- 3 382 383
- US-A- 3 433 990

## Beschreibung

Die Erfindung betrifft einen Elektromotor mit einem diesen dicht umschließenden Gehäuse aus einem Blechmantel, einem drehfest in dem Gehäuse gehalterten Stator, einer Welle, von der mindestens ein Ende aus dem Gehäuse herausgeführt ist, sowie Zwei zu beiden Seiten des Stators angeordneten Zentrierstücken, die einen Außendurchmesser, der auf der dem Stator zugewandten Seite größer als der des Stators ist, aufweisen, den Stator an seinen Stirnenden formschlüssig übergreifen, mit einem Anschlag an den Stirnseiten des Stators anliegen und zur unmittelbaren oder mittelbaren Lagerung der Welle ausgebildet sind.

Bei einem bekannten Elektromotor der genannten Art (US-A-3,433,990) bestehen sämtliche das Motorgehäuse bildenden Teile aus relativ dünnem Blech. Das Gehäuse ist weder korrosionsgeschützt noch nach außen hin abgedichtet.

Für größere Motoren reichen aber dünne Blechgehäuse nicht aus, insbesondere wenn die Gehäuse auch im Unterwasserbetrieb eingesetzt werden sollen. Wenn die Motorgehäuse mit schweren Pumpen verbunden werden, so treten erhebliche mechanische Zug-, Druck- und Biegekräfte auf, die allein durch das Gehäuse aufgenommen werden müssen. Darüber hinaus müssen die Gehäuse gegen erhöhten Innendruck und Außendruck geschützt sein. Dünne Stahlblechgehäuse sind dafür aber nicht geeignet. Darüber hinaus ist es bei Motoren, die im Unterwasserbetrieb arbeiten, unerläßlich, daß diese dicht und korrosionsgeschützt sind.

Der Erfindung liegt die Aufgabe zugrunde, einen Elektromotor zu schaffen, dessen Gehäuse unter Beibehaltung der Vorteile der bekannten Gehäuse hohen mechanischen Belastungen standhält, mit geringem Aufwand herstellbar ist und zuverlässig dicht und korrosionsgeschützt ist.

Erfindungsgemäß wird diese Aufgabe dadurch gelöst, daß der Blechmantel aus nichtrostendem Stahl besteht, daß die Zentrierstücke dickwandig ausgebildet sind, daß die dem Stator abgewandten äußeren Endabschnitte der Zentrierstücke mindestens eine Einschnürung aufweisen, daß der Blechmantel an dem zwischen den beiden Zentrierstücken freiliegenden Bereich des Stators sowie an den beiden Zentrierstücken zumindest bis in die Einschnürung hinein eng anliegt und daß die beiden Stirnenden des Motors durch Endkappen aus nichtrostendem Stahlblech, die den Blechmantel dicht übergreifen, verschlossen sind.

Die vorzugsweise aus Gußeisen bestehenden dickwandigen Zentrierstücke, die an beiden Seiten des Stators angreifen, verleihen dem Motor in den kritischen Bereichen die gleiche mechanische Festigkeit und Belastbarkeit wie bei einem Motor mit einem durchgehenden stabilen Gußgehäuse. Darüber hinaus ist der Motor mit einer äußeren Schicht aus Edelstahlblech überdeckt, so daß er korrosionsgeschützt ist und beispielsweise auch in aggressive Flüssigkeiten eingetaucht werden kann.

Durch die besondere Ausbildung der Zentrierstücke ist es möglich, daß der aufgebrachte Blechmantel die Einzelteile des Motors ohne zusätzliche Hilfsmittel relativ zueinander fixiert.

Die Einschnürung der Zentrierstücke kann dadurch gebildet sein, daß die äußeren Endabschnitte der Zentrierstücke im Durchmesser reduziert sind. Dabei kann der Blechmantel auf den Stator sowie die Zentrierstücke im Druckwalzverfahren aufgebracht werden, so daß der Blechmantel über seine gesamte Länge eng an dem Stator sowie den Zentrierstücken anliegt, wodurch ein guter Wärmeübergang von innen nach außen vorhanden ist und damit für eine intensive Wärmeabfuhr gesorgt ist.

Anstelle des Druckwalzverfahrens kann auch das Kalibrieroder Einziehverfahren zur Aufbringung des Mantels auf den Stator sowie die Zentrierstücke angewendet werden.

Die Endkappen, die die beiden Stirnenden des Motors dicht verschließen, können in ihrem den Blechmantel übergreifenden Abschnitt eine nach außen gedrückte umlaufende Sicke aufweisen, in die ein O-Ring eingelegt ist.

In die Zentrierstücke können gesonderte Lagerträger zur Lagerung der Welle eingesetzt sein. Auf die nach außen gerichteten Stirnenden der Zentrierstücke können Abschlußstücke aufgeschraubt sein, wobei die Lagerträger zwischen Absätzen an den Zentrierstücken einerseits und den Abschlußstücken andererseits festgelegt werden können.

Alternativ ist es aber auch möglich, daß die Zentrierstücke mit den Lagerträgern aus einem Stück bestehen.

Bei einem anderen Ausführungsbeispiel kann die Einschnürung der Zentrierstücke durch eine umlaufende Nut gebildet sein, in die der Blechmantel eingewalzt ist.

Zur Abdichtung der Endkappen kann in die jeweilige umlaufende Nut über den eingewalzten Blechmantel ein O-Ring gelegt werden, der an der glatten Innenseite der jeweiligen Endkappe anliegt.

Die Zentrierstücke können in dem Bereich zwischen der umlaufenden Nut und dem am Stator anliegenden Ende eine zweite umlaufende Nut aufweisen, in die der Blechmantel eingewalzt ist. Dadurch wird die mechanische Stabilität des Motors noch erhöht. In diese zweite Nut kann über den Blechmantel ein O-Ring eingelegt werden, der an der Innenfläche eines aufgesetzten Kühlmantels anliegt.

Der äußere Blechmantel kann ein vorgeformtes Rohr sein, welches nahtlos oder längsnahtgeschweißt ist oder auch tiefgezogen oder aus einer Ronde gedrückt sein kann. Das vorgeformte Rohr paßt formschlüssig über die Zentrierstücke und die Mantelbereiche über dem Stator und den Einschnürungen werden eingewalzt oder eingerollt.

Ölgekühlte Motoren können so ausgebildet sein, daß in den Mantelbereich über dem Stator nur in unmittelbarem Anschluß an die beiden Zentrierstücke je eine Sicke eingerollt ist, während der Mantelabschnitt zwischen den beiden Sicken unverformt bleibt.

Die Erfindung ist in der Zeichnung beispielsweise veranschaulicht und im nachstehenden im einzelnen anhand der Zeichnung beschrieben. Es zeigen:
- Fig. 1: die Ansicht eines Ausführungsbeispiels eines Elektromotors, teilweise im Schnitt,
- Fig. 2: die Ansicht eines anderen Ausführungsbeispiels eines Elektromotors, teilweise im Schnitt, und
- Fig. 3: die Ansicht eines weiteren Ausführungsbei spiels eines Elektromotors, teilweise im Schnitt.

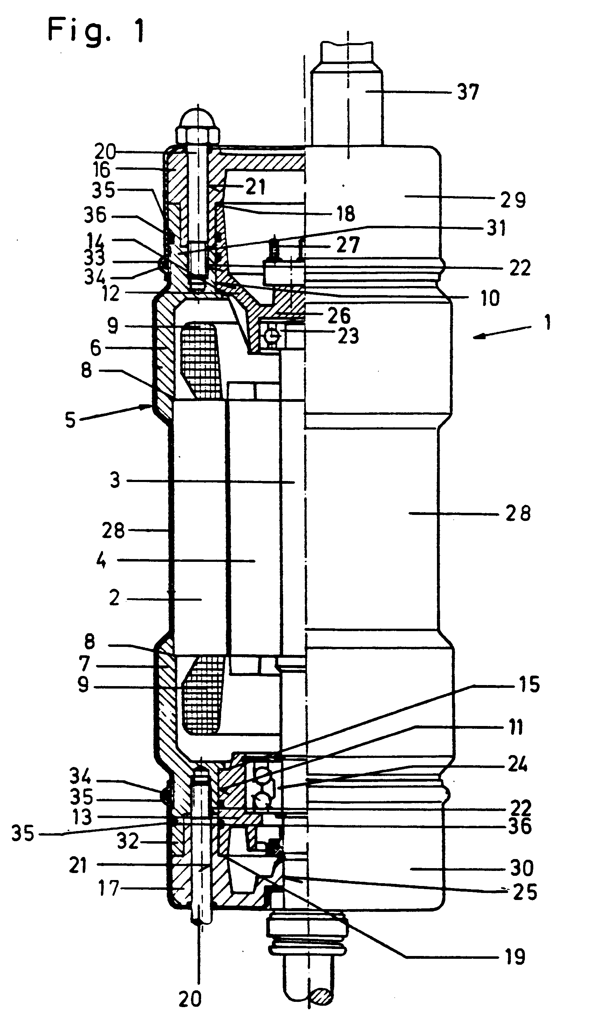

Der in Fig. 1 dargestellte Elektromotor 1 besteht im wesentlichen aus einem Stator 2, einem relativ zu diesem drehbar gelagerten und auf einer Welle 3 sitzenden Rotor 4 sowie einem den Motor dicht umschließenden Gehäuse 5.

Zu beiden Enden des Stators 2 sind Zentrierstücke 6 und 7 angeordnet, deren Außendurchmesser größer als der des Stators 2 ist. An ihrem dem Stator 2 zugewandten Ende sind die Zentrierstücke 6 und 7 mit einem Absatz 8 versehen, mit welchem sie das jeweilige Stirnende des Stators 2 formschlüssig übergreifen. Dadurch ist der Stator 2 relativ zu den Zentrierstücken 6 und 7 zuverlässig ausgerichtet.

Die Zentrierstücke 6 und 7, die aus relativ dickwandigem Material bestehen, sind an ihren dem Stator zugewandten Enden topfförmig ausgebildet und übergreifen mit Abstand die kopfförmigen Wickelenden 9.

In ihrem mittleren Bereich sind die Zentrierstücke 6 und 7 mit großen Bohrungen 10 bzw. 11 versehen, in die gesonderte Lagerträger 12 bzw. 13 eingesetzt sind.

Die Lagerträger 12 und 13 liegen in axialer, zum Stator hinweisender Richtung an Absätzen 14 bzw. 15 der Zentrierstücke 6 bzw. 7 an.

Auf die nach außen gerichteten Stirnenden der Zentrierstücke 6 und 7 sind äußere Abschlußstücke 16 bzw. 17 aufgeschraubt, deren Außendurchmesser dem der Zentrierstücke entspricht und die mit je einem Absatz 18 bzw. 19 gegen die nach außen gerichteten Stirnenden der Lagerträger 12 bzw. 13 drücken, so daß die Lagerträger zwischen den Absätzen 14 bzw. 15 der Zentrierstücke einerseits und den Absätzen 18 bzw. 19 der Abschlußstücke 16 bzw. 17 andererseits festgelegt sind.

Zur Befestigung der Abschlußstücke 16 bzw. 17 an den Zentrierstücken 6 bzw. 7 dienen Kopfschrauben 20, die durch Bohrungen 21 in den Abschlußstücken 16 bzw. 17 hindurchgreifen und in Gewindebohrungen 22 der Zentrierstücke 6 bzw. 7 eingeschraubt sind.

Die Motorwelle 3 ist über Wälzlager 23 bzw. 24 in den Lagerträgern 12 bzw. 13 gelagert.

Auf der in Fig. 1 nach unten weisenden Seite des Motors ragt die Welle durch eine in dem äußeren Abschlußstück 17 vorgesehene Bohrung 25 hindurch und ist dicht nach außen geführt.

Auf der gegenüberliegenden Seite endet das Wellenende im Inneren des Gehäuses, und zwar in einem kurzen Abstand vor einem Boden 26 des Lagerträgers 12. Der Boden 26 des Lagerträgers 12 dient gleichzeitig als Halterung für die elektrischen Klemmen 27 der Wicklungen.

Das den gesamten Elektromotor dicht umschließende Gehäuse 5 besteht aus einem Mantel 28 aus nichtrostendem Stahlblech sowie Kappen 29 bzw. 30 aus ebenfalls nichtrostendem Stahlblech, die den Blechmantel 28 auf beiden Seiten dicht übergreifen.

Der Blechmantel 28 wird zunächst als vorgefertigtes Rohr über die Zentrierstücke 6 und 7 gesteckt. Da diese einen größeren Durchmesser aufweisen als der Stator 2, besteht zunächst zwischen dem Stator und dem Blechmantel ein Zwischenraum. Dieser wird dadurch beseitigt, daß der Blechmantel in dem Bereich zwischen den einander zugewandten Enden der Zentrierstücke 6 und 7 auf den Stator im Druckwalzverfahren bündig aufgedrückt wird.

Die dem Stator 2 abgewandten äußeren Endabschnitte 31 und 32 der Zentrierstücke 6 bzw. 7 sind im Durchmesser reduziert, so daß der Blechmantel sich in einem Abstand über diesen reduzierten Bereichen befindet. Nachdem der mittlere Bereich des Blechmantels 28 an den Stator 2 angewalzt worden ist, werden auch die Endabschnitte des Mantels 28 an die dünneren Endabschnitte 31 und 32 der Zentrierstücke nach dem gleichen Verfahren angedrückt. Auf diese Weise wird durch den Blechmantel 28 eine sehr gute Fixierung der Einzelteile relativ zueinander erreicht. Danach werden die Kappen 29 und 30 aufgesteckt, die die angedrückten Enden des Blechmantels formschlüssig übergreifen. Zur Abdichtung weisen die Blechkappen 29 und 30 in ihrem den Blechmantel 28 übergreifenden Abschnitt eine nach außen gedrückte umlaufende Sicke 33 auf, in die ein O-Ring 34 eingelegt ist. Zur weiteren Abdichtung sind in den Außenflächen der Zentrierstücke 6 und 7 in demjenigen Bereich, der den Blechkappen 29 und 30 zugewandt ist, umlaufende Nuten 35 vorgesehen, in die zur zusätzlichen Abdichtung je ein O-Ring 36 eingelegt ist.

Zusätzliche Dichtungen sind zwischen den Lagerträgern 12 und 13 und den Zentrierstücken 6 und 7 einerseits und den Abschlußstücken 16 und 17 andererseits vorgesehen. Ferner sind Dichtungen rund um die Durchführungsbereiche der Kopfschrauben 20 angeordnet.

Der elektrische Anschluß 37 ist dicht durch die Blechkappe 29 sowie das Abschlußstück 16 hindurchgeführt.

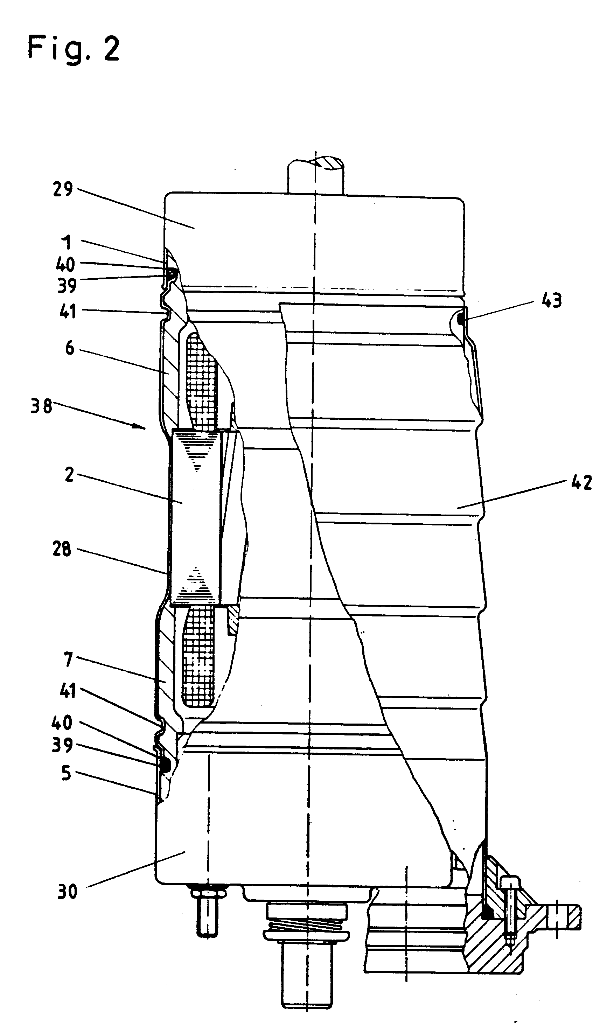

Der in Fig. 2 dargestellte Elektromotor 38 ist ähnlich aufgebaut wie der Motor 1 in dem in Fig. 1 dargestellten Ausführungsbeispiel. Gleiche Teile sind daher auch mit gleichen Positionszahlen versehen.

Die an dem Stator 2 anliegenden Zentrierstücke 6 und 7 weisen jedoch eine etwas andere Gestalt auf. Die Zentrierstücke sind in einem Abstand von ihrem an dem Stator 2 anliegenden Ende mit je einer umlaufenden Nut 39 versehen, in die der Blechmantel 28 eingewalzt ist. Die umlaufenden Nuten entsprechen in ihrer Funktion etwa den mit reduziertem Querschnitt versehenen Endabschnitte 31 und 32 der in Fig. 1 dargestellten Zentrierstücke. Durch das Einwalzen des Blechmantels 28 in die umlaufenden Nuten 39 wird der axiale Zusammenhalt der Motorteile gewährleistet. In die umlaufenden Nuten 39 sind O-Ringe 40 eingelegt, die eine Dichtung gegen die beidseitig aufgesetzten Kappen 29 bzw. 30 bilden. Bei diesem Ausführungsbeispiel sind die auf die Zentrierstücke aufgesetzten Enden der Kappen 29 und 30 glatt zylindrisch ausgebildet, wobei die O-Ringe 40 an den Innenseiten der zylindrischen Kappenenden anliegen

In dem Bereich zwischen der umlaufenden Nut 39 und dem Rotor 2 sind die Zentrierstücke 6 und 7 mit einer weiteren umlaufenden Nut 41 versehen, in welche der Blechmantel 28 eingewalzt ist. Durch diese weitere Nut wird der axiale Zusammenhalt verbessert. Darüber hinaus hat diese zweite Nut 41 noch eine weitere Aufgabe. Bei dem in Fig. 2 dargestellten Ausführungsbeispiel ist der mittlere Motorbereich von einem Kühlmantel 42 aus Edelstahlblech umgeben. Nie im oberen Bereich von Fig. 2 dargestellt, kann in die umlaufende Nut 41 ein O-Ring 42 eingelegt werden, durch den der Rand des Kühlmantels 42 gegenüber dem Motorgehäuse abgedichtet werden kann.

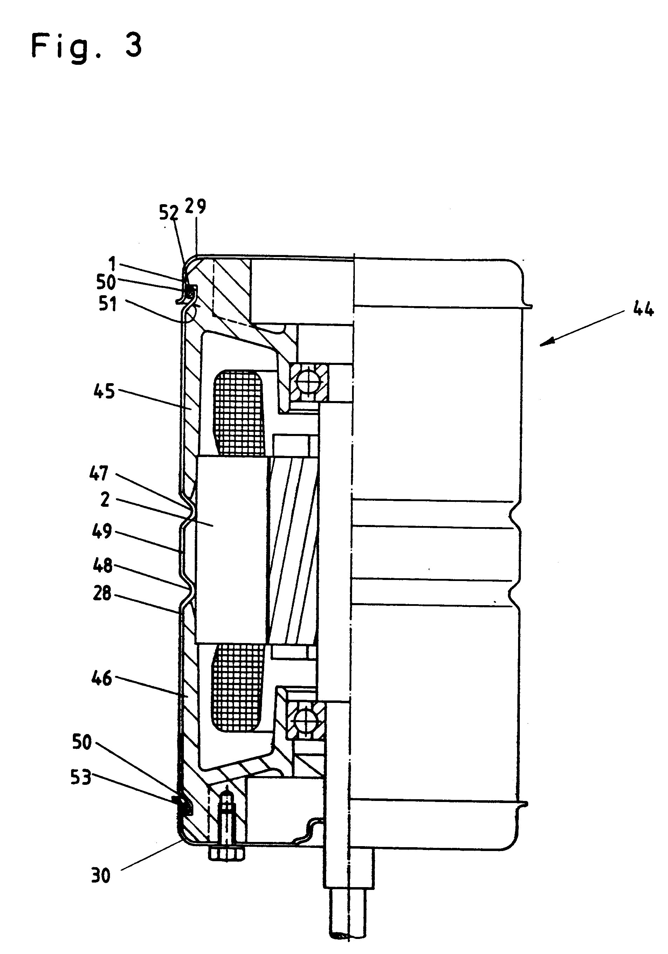

Bei dem in Fig. 3 dargestellten Elektromotor 44 handelt es sich um ein Ausführungsbeispiel mit Ölkühlung. Die beiden Zentrierstücke 45 und 46, die an dem Stator 2 anliegen, sind einstückig mit den Lagerträgern ausgebildet. Beide Zentrierstücke 45 und 46 sind identisch und in entgegengesetzter Position zueinander montiert.

Der Blechmantel 28 ist als vorgeformtes Rohr formschlüssig über die Zentrierstücke 45 und 46 gesteckt und von außen sind über dem Stator 2 nur im Bereich unmittelbar im Anschluß an die beiden Zentrierstücke 45 und 46 je eine Sicke 47 bzw. 48 eingerollt, während der Mantelabschnitt 49 zwischen den beiden Sicken 47 und 48 im wesentlichen unverformt bleibt. In diesem Bereich ist zwischen dem Blechmantel 28 und dem Stator 2 ein Zwischenraum vorgesehen, in den Kühlöl eindringen kann.

Der axiale Zusammenhang der einzelnen Motorteile erfolgt dadurch, daß der Blechmantel in umlaufende Nuten 50 eingewalzt wird, die kurz vor den äußeren Enden der Zentrierstücke 45 und 46 in deren äußeren Umfang eingedreht sind. Auf der dem Stator 2 zugewandten Seite sind die Nuten 50 mit einer Abschrägung 51 versehen, so daß der Blechmantel 28 leicht in die Nut eingewalzt werden kann. Die andere Seite der Nut weist eine senkrecht zur Achse der Zentrierstücke verlaufende Wand 52 auf, die zusammen mit der äußeren Umfangsfläche der Zentrierstücke eine scharfe Kante bildet. Beim Aufbringen des Blechmantels 28 wirkt diese Kante mit einer Schneidrolle zusammen, so daß der Blechmantel dadurch gleichzeitig auf Länge geschnitten wird.

In die umlaufenden Nuten 50 sind O-Ringe 53 eingelegt, durch welche die Endkappen 29 bzw. 30 gegenüber den Zentrierstücken 45 bzw. 46 abgedichtet werden.

### Bezugszeichenliste

- 1: Elektromotor
- 2: Stator
- 3: Welle
- 4: Rotor
- 5: Gehäuse
- 6: Zentrierstück
- 7: Zentrierstück
- 8: Absatz
- 9: kopfförmige Wickelenden
- 10: Bohrung
- 11: Bohrung
- 12: Lagerträger
- 13: Lagerträger
- 14: Absatz
- 15: Absatz
- 16: Abschlußstück
- 17: Abschlußstück
- 18: Absatz
- 19: Absatz
- 20: Kopfschrauben
- 21: Bohrungen
- 22: Gewindebohrungen
- 23: Wälzlager
- 24: Wälzlager
- 25: Bohrung
- 26: Boden
- 27: elektrische Klemmen
- 28: Mantel
- 29: Kappe
- 30: Kappe
- 31: Endabschnitte
- 32: Endabschnitte
- 33: Sicke
- 34: O-Ring
- 35: umlaufende Nut
- 36: O-Ring
- 37: elektrischer Anschluß
- 38: Elektromotor
- 39: umlaufende Nut
- 40: O-Ring
- 41: umlaufende Nut
- 42: Kühlmantel
- 43: O-Ring
- 44: Elektromotor
- 45: Zentrierstück
- 46: Zentrierstück
- 47: Sicke
- 48: Sicke
- 49: Mantelabschnitt
- 50: umlaufende Nut
- 51: Abschrägung
- 52: senkrechte Wand
- 53: O-Ringe

## Patentansprüche

1. Elektromotor (1; 38; 44) mit einem diesen dicht umschließenden Gehäuse (5) aus einem Blechmantel (28), einem drehfest in dem Gehäuse (5) gehalterten Stator (2), einer Welle (3), von der mindestens ein Ende aus dem Gehäuse (5) herausgeführt ist, sowie zwei zu beiden Seiten des Stators (2) angeordneten Zentrierstücken (6, 7; 45, 46), die einen Außendurchmesser, der auf der dem Stator (2) zugewandten Seite größer als der des Stators (2) ist, aufweisen, den Stator (2) an seinen Stirnenden formschlüssig übergreifen, mit einem Anschlag an den Stirnseiten des Stators (2) anliegen und zur unmittelbaren oder mittelbaren Lagerung der Welle ausgebildet sind, **dadurch gekennzeichnet,** daß der Blechmantel (28) aus nichtrostendem Stahl besteht, daß die Zentrierstücke (6, 7; 45, 46) dickwandig ausgebildet sind, daß die dem Stator (2) abgewandten äußeren Endabschnitte der Zentrierstücke mindestens eine Einschnürung aufweisen, daß der Blechmantel (28) an dem zwischen den beiden Zentrierstücken freiliegenden Bereich des Stators (2) sowie an den beiden Zentrierstücken (6, 7; 45, 46) zumindest bis in die Einschnürung hinein eng anliegt und daß die beiden Stirnenden des Motors (1; 38; 44) durch Endkappen (29, 30) aus nichtrostendem Stahlblech, die den Blechmantel (28) dicht übergreifen, verschlossen sind.

2. Elektromotor nach Anspruch 1, **dadurch gekennzeichnet,** daß die Einschnürung der Zentrierstücke (6, 7) dadurch gebildet ist, daß die äußeren Endabschnitte (31, 32) der Zentrierstücke im Durchmesser reduziert sind.

3. Elektromotor nach Anspruch 1 oder 2, **dadurch gekennzeichnet,** daß der Blechmantel (28) auf den Stator (2) sowie die Zentrierstücke (6, 7) im Druckwalzverfahren aufgebracht ist.

4. Elektromotor nach einem der Ansprüche 1 bis 3, **dadurch gekennzeichnet,** daß die Endkappen (29, 30) in ihrem den Blechmantel (28) übergreifenden Abschnitt eine nach außen gedrückte umlaufende Sicke (33) aufweisen, in die ein O-Ring (34) eingelegt ist.

5. Elektromotor nach einem der Ansprüche 1 bis 4, **dadurch gekennzeichnet,** daß in die Zentrierstücke (6, 7) gesonderte Lagerträger (12, 13) zur Lagerung der Welle (3) eingesetzt sind.

6. Elektromotor nach Anspruch 5, **dadurch gekennzeichnet,** daß auf die nach außen gerichteten Stirnenden der Zentrierstücke (6, 7) Abschlußstücke (16, 17) aufgeschraubt sind und daß die Lagerträger (12, 13) zwischen Absätzen (14, 15) an den Zentrierstücken (6, 7) einerseits und den Abschlußstücken (16, 17) andererseits festgelegt sind.

7. Elektromotor nach Anspruch 1, **dadurch gekennzeichnet,** daß die Einschnürung der Zentrierstücke (6, 7; 45, 46) durch eine umlaufende Nut (39; 50) gebildet ist, in die der Blechmantel (28) eingewalzt bzw. eingerollt ist.

8. Elektromotor nach Anspruch 7, **dadurch gekennzeichnet,** daß in die jeweilige umlaufende Nut (39; 50) über den eingewalzten Blechmantel (28) ein O-Ring (40; 53) eingelegt ist, der an der glatten Innenseite der jeweiligen Endkappe (29, 30) anliegt.

9. Elektromotor nach Anspruch 7 oder 8, **dadurch gekennzeichnet,** daß die Zentrierstücke (6, 7) in dem Bereich zwischen der umlaufenden Nut (39) und dem am Stator (2) anliegenden Ende eine zweite umlaufende Nut (41) aufweisen, in die der Blechmantel (28) eingewalzt ist, und daß in diese Nut (41) über dem Blechmantel ein O-Ring (43) eingelegt ist, der an der Innenfläche eines aufgesetzten Kühlmantels (42) anliegt.

10. Elektromotor nach einem der Ansprüche 1 bis 9, **dadurch gekennzeichnet,** daß der äußere Blechmantel (28) ein vorgeformtes Rohr ist, das formschlüssig über die Zentrierstücke (45, 46) paßt und daß die Mantelbereiche über dem Stator (2) und den Einschnürungen eingewalzt oder eingerollt sind.

11. Elektromotor nach Anspruch 10 mit einer Ölkühlung, **dadurch gekennzeichnet,** daß in dem Mantelbereich über dem Stator (2) nur in unmittelbarem Anschluß an die beiden Zentrierstücke (45, 46) je eine Sicke (47, 48) eingerollt ist, während der Mantelabschnitt (49) zwischen den beiden Sicken unverformt ist.

## Claims

1. Electric motor (1; 38; 44) having a housing (5) which encloses said motor in a sealed manner and consists of a sheet-metal jacket (28), having a stator (2) which is held in a rotationally fixed manner in the housing (5), having a shaft (3) at least one end of which is led out of the housing (5), and having two centring pieces (6, 7; 45, 46), which are arranged on both sides of the stator (2) and have an external diameter which, on the side facing the stator (2), is greater than that of the stator (2), and which centring pieces (6, 7; 45, 46) engage over the stator (2) in a positively-locking manner on its ends, rest with a stop against the ends of the stator (2) and are constructed for the direct or indirect bearing of the shaft, characterised in that the sheet-metal jacket (28) consists of stainless steel, in that the centring pieces (6, 7; 45, 46) are constructed with thick walls, in that the outer end sections of the centring pieces facing away from the stator (2) have at least one constriction, in that the sheet-metal jacket (28) rests tightly, at least as far as the constriction, on the region of the stator (2) which exposes the two centring pieces, and on the two centring pieces (6, 7; 45, 46), and in that the two ends of the motor (1; 38; 44) are closed by end caps (29, 30) which consist of stainless sheet steel and engage over the sheet-metal jacket (28) in a sealed manner.

2. Electric motor according to Claim 1, characterised in that the constriction of the centring pieces (6, 7) is formed by the outer end sections (31, 32) of the centring pieces being reduced in diameter.

3. Electric motor according to Claim 1 or 2, characterised in that the sheet-metal jacket (28) is fitted onto the stator (2) and the centring pieces (6, 7) using the pressure-rolling method.

4. Electric motor according to one of Claims 1 to 3, characterised in that the end caps (29, 30) have a circumferential bead (33), which is pressed outwards and into which an O-ring (34) is inserted, in the section which engages over the sheet-metal jacket (28).

5. Electric motor according to one of Claims 1 to 4, characterised in that separate bearing carriers (12, 13) for bearing the shaft (3) are inserted into the centring pieces (6, 7).

6. Electric motor according to Claim 5, characterised in that terminating pieces (16, 17) are screwed onto the ends of the centring pieces (6, 7) pointing outwards, and in that the bearing carriers (12, 13) are fixed between steps (14, 15) on the centring pieces (6, 7) on the one hand, and the terminating pieces (16, 17) on the other hand.

7. Electric motor according to Claim 1, characterised in that the constriction of the centring pieces (6, 7; 45, 46) is formed by a circumferential groove (39; 50) into which the sheet-metal jacket (28) is curled or rolled.

8. Electric motor according to Claim 7, characterised in that an O-ring (40; 53) is inserted into the respective circumferential groove (39; 50) over the curled-in sheet-metal jacket (28), which O-ring (40; 53) rests against the smooth inner side of the respective end cap (29, 30).

9. Electric motor according to Claim 7 or 8, characterised in that the centring pieces (6, 7) have a second circumferential groove (41), into which the sheet-metal jacket (28) is curled, in the region between the circumferential groove (39) and the end resting on the stator (2), and in that an O-ring (43) is inserted into this groove (41) over the sheet-metal jacket, which O-ring (43) rests on the inner surface of a cooling jacket (42) which is fitted on.

10. Electric motor according to one of Claims 1 to 9, characterised in that the outer sheet-metal jacket (28) is a pre-formed tube which fits in a positively-locking manner over the centring pieces (45, 46), and in that the jacket regions above the stator (2) and the constrictions are curled or rolled in.

11. Electric motor according to Claim 10 having oil cooling, characterised in that in each case one bead (47, 48) is rolled-in in the jacket region above the stator (2), only in direct connection with the two centring pieces (45, 46), while the jacket section (49) is undeformed between the two beads.

## Revendications

1. Moteur électrique (1; 38; 44), comportant un carter (5) qui l'enferme hermétiquement et qui comprend une enveloppe en tôle (28), un stator (2) qui est maintenu dans le carter (5) sans possibilité de rotation, un arbre (3) dont une extrémité au moins sort du carter (5), ainsi que deux pièces de centrage (6, 7; 45, 46) qui sont disposées de part et d'autre du stator (2), présentent, du côté adjacent au stator (2), un diamètre extérieur plus grand que celui du stator (2), sont emboîtées sur les extrémités frontales du stator (2) en épousant leur forme, s'appuient par une butée contre les faces frontales du stator (2) et sont réalisées en vue du montage direct ou indirect de l'arbre, caractérisé en ce que l'enveloppe en tôle (28) est en acier inoxydable, en ce que les pièces de centrage (6, 7; 45, 46) sont réalisées avec une paroi épaisse, en ce que les parties d'extrémité externes des pièces de centrage, à l'opposé du stator (2), présentent au moins un rétrécissement, en ce que l'enveloppe en tôle (28) s'applique étroitement sur la partie libre du stator (2) entre les deux pièces de centrage ainsi que sur les deux pièces de centrage (6, 7; 45, 46), au moins jusque dans le rétrécisement, et en ce que les deux extrémités frontales du moteur (1; 38; 44) sont fermées par des capuchons d'extrémité (29, 30) en tôle d'acier inoxydable, qui sont emboîtées hermétiquement sur l'enveloppe en tôle (28).

2. Moteur électrique selon la revendication 1, caractérisé en ce que le rétrécissement des pièces de centrage (6, 7) est formé par le fait que les parties d'extrémité externes (31, 32) des pièces de centrage ont un diamètre réduit.

3. Moteur électrique selon la revendication 1 ou 2, caractérisé en ce que l'enveloppe en tôle (28) est posée sur le stator (2) ainsi que sur les pièces de centrage (6, 7) par le procédé du fluotournage.

4. Moteur électrique selon l'une quelconque des revendications 1 à 3, caractérisé en ce que les capuchons d'extrémité (29, 30) présentent, dans leur partie qui est emboîtée sur l'enveloppe en tôle (28), une moulure circonférentielle (33) emboutie vers l'extérieur, dans laquelle est placé un anneau torique d'étanchéité (34).

5. Moteur électrique selon l'une quelconque des revendications 1 à 4, caractérisé en ce que des supports de palier séparés (12, 13) pour le montage de l'arbre (3) sont insérés dans les pièces de centrage (6, 7).

6. Moteur électrique selon la revendication 5, caractérisé en ce que des pièces de fermeture (16, 17) sont vissées sur les extrémités frontales, dirigées vers l'extérieur, des pièces de centrage (6, 7), et en ce que les supports de palier (12, 13) sont fixés entre des gradins (14, 15) prévus sur les pièces de centrage (6, 7) d'une part et les pièces de fermeture (16, 17) d'autre part.

7. Moteur électrique selon la revendication 1, caractérisé en ce que le rétrécissement des pièces de centrage (6, 7; 45, 46) est formé par une gorge circonférentielle (39; 50) dans laquelle l'enveloppe en tôle (28) est enfoncée par molettage ou roulage.

8. Moteur électrique selon la revendication 7, caractérisé en ce qu'il est placé, dans chaque gorge circonférentielle (39; 50), au-dessus de l'enveloppe en tôle (28) enfoncée par molettage, un anneau torique d'étanchéité (40; 53) qui s'appuie sur la face interne lisse du capuchon d'extrémité respectif (29, 30).

9. Moteur électrique selon la revendication 7 ou 8, caractérisé en ce que les pièces de centrage (6, 7) présentent, dans la région entre la gorge circonférentielle (39) et l'extrémité appliquée sur le stator (2), une seconde gorge circonférentielle (41) dans laquelle l'enveloppe en tôle (28) est enfoncée par molettage, et en ce qu'il est placé, dans cette gorge (41), au-dessus de l'enveloppe en tôle, un anneau torique d'étanchéité (43) qui s'appuie sur la surface interne d'une chemise de refroidissement (42) disposée par-dessus.

10. Moteur électrique selon l'une quelconque des revendications 1 à 9, caractérisé en ce que l'enveloppe en tôle extérieure (28) est un tube préformé qui s'adapte sur les pièces de centrage (45, 46) en épousant leur forme, et en ce que les régions de l'enveloppe audessus du stator (2) et les rétrécissements sont façonnées par molettage ou roulage.

11. Moteur électrique selon la revendication 10 avec système de refroidissement à huile, caractérisé en ce que, dans la région de l'enveloppe au-dessus du stator (2), il n'est formé par roulage qu'une moulure (47, 48) à la suite immédiate de chacune des deux pièces de centrage (45, 46), tandis que la partie (49) de l'enveloppe entre ces deux moulures est non déformée.
